# EUROPEAN PATENT SPECIFICATION

(11) **EP 3 021 720 B1**
(45) Date of publication and mention of the grant of the patent: **17.03.2021**
(21) Application number: 14852324.4
(22) Date of filing: 06.10.2014
(51) Int. Cl.: A47J 43/046, A47J 43/27, A47J 43/07

(54) **BLENDER**
MISCHER
MÉLANGEUR

(30) Priority: 07.10.2013 US 201314047954
(43) Date of publication of application: 25.05.2016
(73) Proprietor: Capbran Holdings, LLC, Los Angeles, California 90025 (US)
(72) Inventor: SAPIRE, Colin, Los Angeles California 90025 (US)
(74) Representative: Hellmich, Wolfgang
(86) International application number: PCT/US2014/059345
(87) International publication number: WO 2015/054153

(56) References cited:
- WO-A1-2014/134600
- US-A- 4 741 482
- US-A1- 2002 141 286
- US-A1- 2008 221 739
- US-A1- 2009 084 274
- US-A1- 2009 084 274
- US-A1- 2012 018 561
- US-A1- 2012 213 029
- US-B2- 7 018 091

## Description

The present invention relates to household and kitchen appliances. In particular, the present invention relates to blenders and food processors. Even more particularly, the present invention relates to high performance blenders with various safety features and alternate blending speeds. A food processing device according to the preamble part of claim 1 is known from US 2009/0084274 A1.

US 2009/0084274 A1 teaches a kitchen application, which has an electric motor. The motor forms kind of a bridge between the base which comprises a 1^{st} tool coupling and 2^{nd} tool coupling above the 1^{st} one. A safety lock system ensures that a first tool configured as a beater and a second tool configured as a blender receptacle are inserted properly into the kitchen appliance. The blender receptacle has a receptacle handle. A rod can be moved to and fro in the receptacle handle between a first and second position. Further the rod is configured as a coupling bar to monitor the interface at a receptacle cover. When the receptacle cover is properly inserted, the rod presses onto a second switch slider, which is pushed as a result into an intermediate space between a second magnetic sensor and a second magnet arranged on the blender receptacle.

Traditionally, blenders are mainly used for blending liquid or relatively soft solid such as fruits and vegetables. Over the years, different receipts with more solid food, such as meats and ice, for blenders have been developed. These solid or dry foods are significantly more difficult to break and mix together. Therefore, there are increasing demands for high performance blenders with more rigid blades that are capable of mixing and blending different kinds of food. To break different kinds of solid foods, a strong and powerful motor must be used to drive the blades of the blender. Yet, various problems associated with a high power motor limit the design and the functionality of blenders.

One obvious problem associated with a powerful motor is the significant increase in size and weight of the blender. Since the weight of the blender increases with the size of the motor and the size of the blender also increases with the size the housing that holds the motor, the use of a large motor makes the blender less desirable for many consumers due to the size and the weight. To limit the size, the motor will have to be confined in a smaller housing. Yet, this reduces the ventilation of the housing, causing potential overheating the motor.

Overheating of the motor poses different safety and durability concerns to a blender. The overheating of a powerful motor confined in small housing could damage the components of the motor. The heat could melt the plastic and the electrical wires inside or nearby the motor housing, causing to emit hazardous and highly unpleasant smell. The melting or even burning of the electrical wires could also significantly increase the chance of electricity leakage and even cause the burning of the blender. The heat from the motor could also be transferred to the outer housing or the shell of the blender. This could melt the external design of the blender and potentially burn and injure the user.

Another type of overheating associated with a powerful motor is the overheating of the blade assembly. The blades in a blender rotate in a significantly higher speed when it is driven by a powerful motor. The friction associated with the high-speed rotation often generates a large amount of heat. When liquid or semi-liquid foods are put in the blender, the heat of the blades can usually quickly disperse over the foods. However, when solid and dry foods are being processed, heat accumulates around the moving part of the blade assembly and is transferred to other parts of the blender. The heat could melt the plastic parts of the blender, releasing hazardous gas and endangering the health of the users. Any damage to the blade assembly could also affect the rotational speed of the blades, cause the blade to vibrate irregularly and vigorously, and even change the blade's rotation path. This affects the efficiency of the blender and sometimes renders the blender inoperable.

Another problem associated with a powerful motor is the vibration of motor and the blender. For a small motor, such as a 200-watt motor, the vibration is usually hardly noticeable. However, when a more powerful motor is used, the vibration increases significantly. Not only does the vibration cause unpleasant sound and unwanted movement of the blender, but it also creates other safety and design issues. In general, a blender with notable vibration is undesirable and perceived as unreliable by the customers. Unmanageable vibration could cause the blender to topple and fall. Vibration could also affect the normal horizontal rotation of the blades and reduce the efficiency of the blender.

Blenders with powerful motors are subject to heavy usage. They are often used for crushing ice and breaking rigid and dry foods. The blades become an expensive part of the blender because it must be durable and have the quality required for crushing and breaking hard objects. The blades must also be sharp and rigid for their usage. This raises safety concerns to the blender with powerful motors since the blades could severely injure the users if the users accidentally contact the blades. Even if a blender is properly designed, it could still pose a threat to the users, especially children, because of improper installation or unintended use. This safety concern is of particular importance for high performance blender because of its enhanced ability in cutting through more solid objects.

Blenders with powerful motors are usually relatively large in size. Its blade holder and the mixing vessel are also larger than those in regular blenders. Owing to their size, it can be difficult for users to attach the mixing vessel to the blade holder because the users may not be able to firmly grip the large mixing vessel with one hand. One common difficulty is not being able to screw the blade holder from the mixing vessel to a satisfactory tightness. If the blade holder is not screwed on tight enough, liquid may seep out of the mixing vessel through the blade holder into the motor unit of the blender. However, if the blade holder is screwed onto the mixing vessel too tightly, after the blending is done, it may be difficult to unscrew the blade holder from the mixing vessel. In particular, after each blending, the mixing vessel contains the blended food or liquid. Users would normally be hesitant to forcefully turn the blade holder due to the concern that the content in the mixing vessel may splash at the moment the blade holder starts unscrewing from the mixing vessel. The blending of the liquid content in the mixing vessel could also cause some of the liquid to go into the junction of the mixing vessel and the blade holder, sealing the mixing vessel and causing the blade holder even more difficult to unscrew. Moreover, the exterior of the mixing vessel is often wet and slippery. Thus, screwing and unscrewing the blade holder and the mixing vessel could be extremely difficult, especially for high power blenders with large mixing vessels.

Blenders with powerful motors are difficult to build and it is extremely challenging to address all safety and design problems associated with a large motor. Accordingly, a long-felt need remains for a high performance blender system that is safe, convenient to use and easy to clean.

Starting from US 2009/0084274 A1, the technical problem may be seen in providing a convenient high power blender system.

This problem is solved by a food processing device of claim 1.

Preferred embodiments are the subject matter of the dependent claims.

The wrench, blade holder, and mixing vessel have several advantages over the prior art. Since the socket is complimentarily shaped to the bottom surface of the blade holder, the wrench can easily be placed over the blade holder and easily removed from the blade holder. While easily removable, by having the complimentary shaped structures, the wrench and blade holder do not slip off each other when the wrench is rotated either clockwise (to loosen), or counterclockwise (to tighten) the blade holder and the mixing vessel. After the blade holder and mixing vessel are either tightened or loosed to the user's preference, the wrench is simple lifted off bottom surface of the blade holder. In this way, the user can tighten the mixing vessel and blade holder enough so that the contents of the mixing vessel will not leak out without having to worry about over tightening the mixing vessel, which would later make it difficult to remove the mixing vessel from the blade holder.
FIG. 1 is a perspective view of a blender in accordance with an embodiment of the present invention with a mixing vessel.
FIG. 2 is perspective view showing the assembly of a mixing vessel, blade holder, and base shown in Fig. 1.
FIG. 3 is an illustrative view of the internal structure of a motor housing of the motor base.
FIG. 4 is a side view of the mixing vessel separated from the blade holder.
FIG. 5 is a font view of the mixing vessel of Fig. 4.
FIG. 6 is a side cross-section view of the base.
FIG. 7 is a top view of the base of Fig. 6.

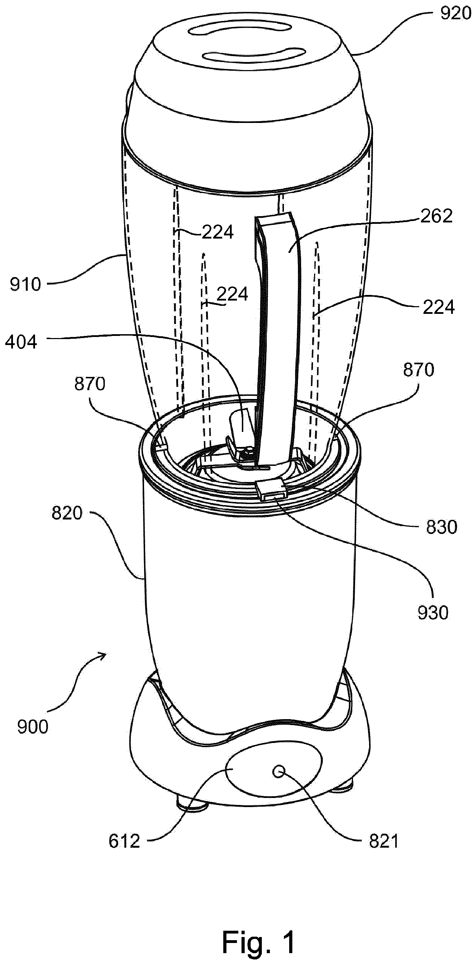

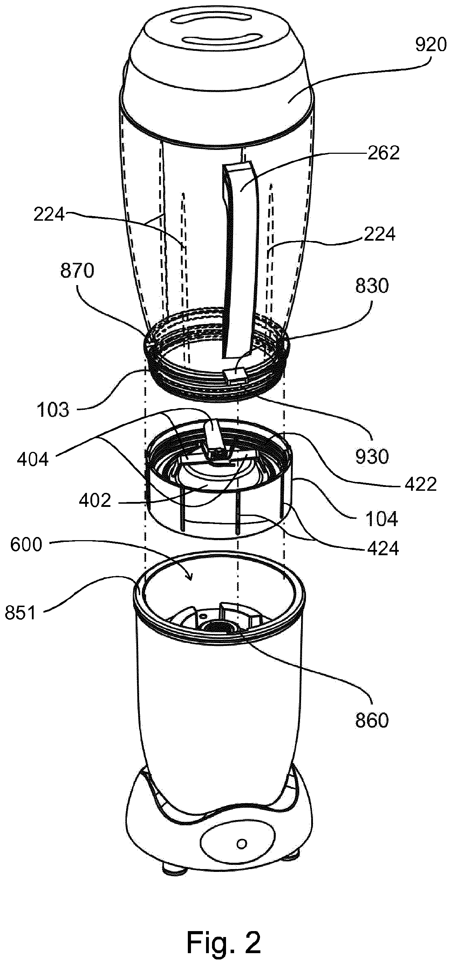

FIGs. 1 - 5 illustrate a blender 900 that is capable of operating at varying speeds. The blender 900 can only operate at certain speeds when it is used with mixing vessel 910. The mixing vessel 910 can be used not only to blend, but also to heat the food content in the mixing vessel 910. In order to heat the food content in the mixing vessel 801, the blender 900 is capable of operating at a sufficiently high speed that generates heat in order to warm or cook the food content in the mixing vessel 910. Because the food content in the mixing vessel 910 can be heated by the blending operation, it is desirable for the mixing vessel 910 to ventilate the heat. Accordingly, the mixing vessel 910 is open on both of its ends. As shown in FIG. 2, the mixing vessel 910 is removably attachable to the blade holder 104 on one end and removably attachable to a lid 920 on the other open end. When food is being blended and processed by the blender 900, the removable lid 920 can be opened to ventilate the heat in the mixing vessel 910. Those skilled in the art will appreciate that the mixing vessel 910 may engage with the blade holder 104 by other means known or developed in the art, such as a series of cap-locking members, ridges or a push-and-turn mechanism.

On both the external wall and the internal wall of the mixing vessel 910, multiple elongated ridges 224 are present. The ridges 224 may be spaced equally from each other. The ridges 224 on the internal wall of the mixing vessel 910 facilitate the blending of the foods in the mixing vessel 910. The position of the internal ridges 224 are preferably near the opening that is connected to blade holder 104 because most of the blending of the foods occurs near the blade holder 104. The ridges 224 on the external wall help the users to grip the vessel 202 more firmly by providing anti-slippery effect. The ridges 224 are rib-like structures that extend substantially vertically from the top to the bottom of the mixing vessel 910. The number of ridges 224 may be varied. The mixing vessel 910 has a handle 262 for users to grip the vessel 910. The external ridges 224 are no longer needed for anti-slippery reason but they could still be present for aesthetic reasons.

FIG. 2 shows a blade holder 104 comprising a plastic base 402 and a blade 404. The blade 404 is rotatably attached to the plastic base 402. The plastic base 402 has a circular cylindrical shape. On its outer wall, it has a plurality of ridges 424 to provide traction for the user to turn the blade holder 104 when the user separates the blade holder 104 from the mixing vessel 102 or screws the blade holder 104 back into the mixing vessel 910. On its inner wall, the blade holder 104 contains a connection mechanism such as screw threads 422 that match with the connection mechanism, such as screw-fit-relation 103, on the mixing vessel 910.

Different kinds of blades 404 have different effect and efficiency on the cutting and blending of different kinds of food. Hence, the blade 404 is different for different embodiments of the present invention. In one embodiment, the blade has only two pieces. Yet, in other embodiments, the blade 404 has four pieces. Some of the blades 404 have teeth on it. The blades 404 in some embodiments are flat, while others have pieces extending out of their plane at various angles.

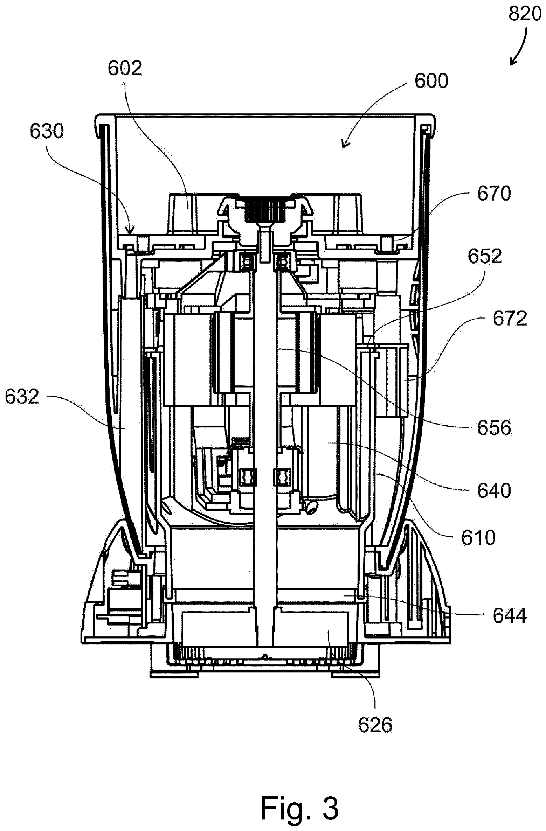

FIG. 3 is an illustrative drawing of the internal structure of the motor base 820. FIG. 3 shows the drainage hole 630 and its connection with the tunnel 632. The actuator 670 that is connected to the circuit of the motor by a switch mechanism 672. The switch mechanism could be any mechanism that is known or developed in the art. The motor housing 610 contains a motor 640. The motor 640 is a high power motor with at least one thousand watt (1000W) power, preferably 1200W. The power of the motor 640 can vary and will depend on the design and the primary intended use of the blender 100. Furthermore, other lower power motors can also be used with the design and features disclosed herein. This invention mainly address the problems of a high power motor, such as safety, vibration and overheating.

The motor 640 is mounted on a motor bracket 652, which is only connected to the ceiling of the motor housing 610 through a plurality of rubber dampers 654. The rubber dampers 654 are the only connection points between the motor bracket 652 and the motor housing 610. Hence, the motor 640 suspends from the ceiling of motor housing 610. The motor 640 drives the impeller 602 through an axis 656.

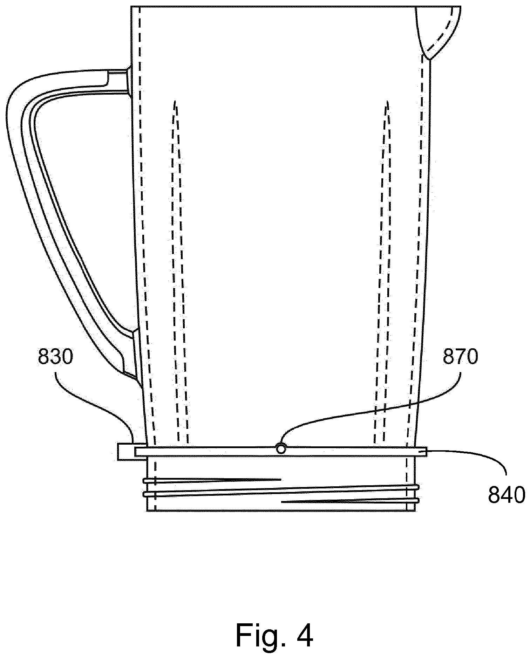

As shown in FIG. 4, the mixing vessel 910 has a lip 840 which has a circumference that substantially matches the outer circumference of the blade holder 104, such that when the blade holder 104 is affixed to the motor base 820, the lip 840 is substantially flush with the inner surface of well 600 and the top edge of the well wall 851 as shown in FIG. 1. The lip 840 has at least a first emitter 870 on the mixing vessel 910. As illustrated in FIG. 4, the lip 840 has two embedded emitters 870, although one skilled in the art can position the emitters on other positions on mixing vessel 910 besides lip 840 and utilize different numbers of emitters 870.

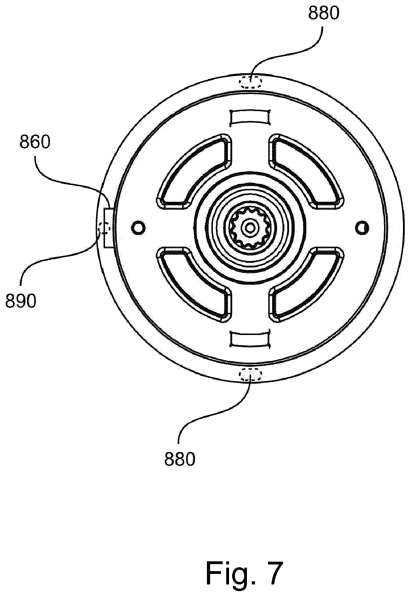

The motor base 820 has at least a first detector 880 corresponding to at least one emitter 870 on the mixing vessel 910. The emitter 870 may be a magnet. The detector 880 may be a hall sensor. As illustrated in FIG. 7, two detectors 880 are embedded under the top edge 851 of the well wall 850. Detectors 880 may be placed in different positions of the motor base so long as detectors 880 correspond with the same position as emitters 870.

When the mixing vessel 910, with the attached blade holder 104, is placed into the well 600 of the motor base 820, the emitters 870 on the lip 840 of the mixing vessel 910 interact with the detectors 880 embedded in the well wall 850 to automatically activate the blender 900.

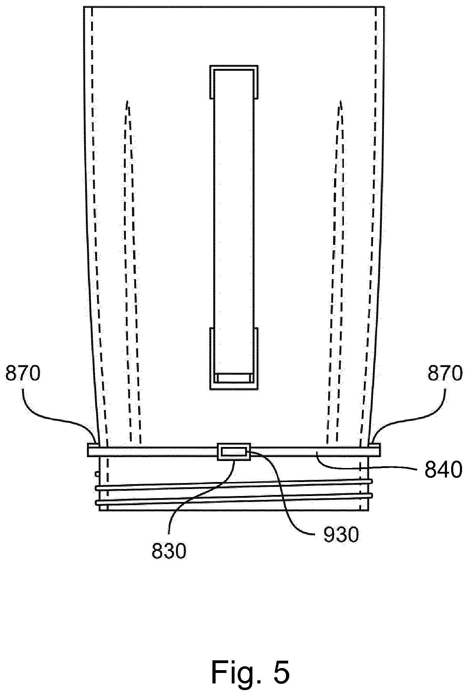

As shown in FIGS. 4 and 5, the mixing vessel 910 has a protrusion 830. One skilled in the art may utilize more than one protrusion 830 to better secure mixing vessel 910 to motor base 820. The protrusion 830 has at least a second emitter 930 embedded in it. The emitter 930 can be a magnet or any signal-emitting component that does not require any physical interaction between the emitter and detector. In an alternative embodiment of the invention, a user could manually actuate a switch to activate the blender if detectors 880 detect emitters 870.

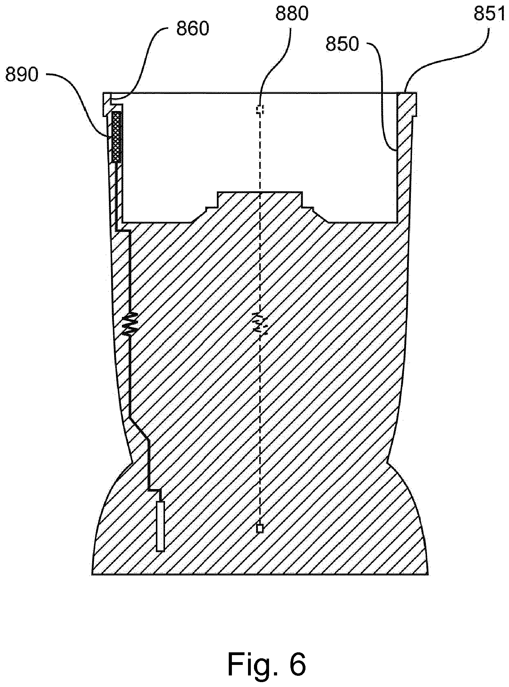

As shown in FIG. 2, the rectangular protrusion 830 is complementary to the rectangular recess 860 (best shown in FIGS. 6 and 7) in the top edge of the well wall 851 of motor base 820. If more than one protrusion 830 is present in other embodiments, those embodiments will also have more than one recess 860. The motor base 820 has a second detector 890 embedded underneath the recess 860, as illustrated in FIGS. 6 and 7. The second detector 890 corresponds with the second emitter 930 embedded in protrusion 830 of the mixing vessel 910. Other embodiments may also include multiple types of detectors 890 under recess 860. The detector 890 may be positioned in another position on motor base 820 besides recess 860, so long as it corresponds to the position of emitter 930.

Detectors 880 are embedded within the well wall 850 in proximity to the top edge 851. While the positions of detectors 880 should correspond with the positions of the emitters 870 on the mixing vessel 810, detectors 880 can be positioned by those skilled in the art to other positions in blender base 820. The emitters 870 and detectors 880 are technology, known by those skilled in the art, that can emit and detect a signal without any physical interaction between the emitter and detector.

In this embodiment, when the mixing vessel 810, with the attached blade holder 104, is placed into the well 600 of the motor base 820, the protrusion 830 orients the mixing vessel 810 when it is engaged with the recess 860 such that the emitters 870 on the lip 840 of the mixing vessel 810 are positioned to interact with the detectors 880 embedded in the well wall 850. When the emitters 870 interact with the detectors 880, the blender 800 is automatically activated to blend the contents in the mixing vessel 810. In an alternative embodiment of the invention, a user could manually actuate a switch to activate the blender if detectors 880 detect ermitters 870.

When the mixing vessel 910, with the attached blade holder 104, is placed into the well 600 of the motor base 820, the protrusion 830 functions to secure the mixing vessel 910 in the operating position by engaging the rectangular recess 860. The protrusion 830 rests within the recess 860 so the mixing vessel 910 does not move when the blender 900 is activated. The protrusion 830 orients the mixing vessel 910 when resting in the recess 860 so that the emitter 930 interacts with the detector 890.

The emitter 930 embedded inside the protrusion 830 functions to control the operating speed of the motor base 820. When the emitter 930 interacts with the detector 890, the detector 890 allows the blender 900 to blend at an alternate speed when the user also depresses switch 612. Those skilled in the art will appreciate that more than one type of emitter 930 and detector 890 can be used. Thus, different mixing vessels may have different combinations/numbers of emitters 930 and detectors 890 to allow blender 900 to further differentiate between different types of mixing vessels.

To activate the alternative blend speed of blender 900, the detector 890 must detect emitter 930 and the user must depress switch 612. In an alternative embodiment, the blender 900 can be operated at the alternative blend speed without requiring the user to depress switch 612. When the alternative blend speed is active, an indicator 821 may indicate to the user that an alternative blend speed is active. The indicator 821 can take the form of an LED that changes color, and those skilled in the art can appreciate that the indicator may be a mechanical indicator that changes position when the user activates switch 612.

Alternative blending speeds can include any speed, known by those skilled in the art that can change the consistency or temperature of the blended contents. For example, the blending speed can be increased dramatically such that the friction from the blades can increase the temperature of the blended contents, resulting in a warm soup as a finished product. Or the blending speed may be slow to facilitate ice cream or sorbet making.

## Claims

1. A food processing device, comprising:
a mixing vessel (910), said mixing vessel (910) having:
a first open end and a second open end;
a lip (840) located in proximity to said first open end, said lip (840) having first emitter (870) embedded in said lip (840);
a protrusion (830) located in proximity to said first open end, said protrusion (830) having a second emitter (930) embedded in said protrusion (830);
a blade holder (104) having a blade (404),
**characterized in that**
said blade holder (104) is capable of being removably affixed to said first open end of said mixing vessel (910);
a motor base (820) is capable of receiving said blade holder (104), said motor base (820) having:
a recess (860) for receiving said protrusion (830) in said mixing vessel (910);
a motor (640) for driving said blade (404) of said blade holder (104);
a first detector (880) embedded in said motor base (820) for detecting a signal from said first emitter (870) of said mixing vessel (910); wherein, when said motor base (820) receives said blade holder (104) affixed to said mixing vessel (910), said first detector (880) detects a signal from said first emitter (870) in said lip (840) to activate said motor (640); and
a second detector (890) for detecting a signal from said second emitter (930), said second detector (890) being embedded in the recess (860); said second emitter (930) is capable of emitting a signal to said second detector (890) to activate an alternative blend speed depending on said signal from said second emitter (930) to said second detector (890).

2. The device of claim 1, wherein:
said first open end is adapted to be affixed to said blade holder (104); and,
said second open end is adapted to be affixed to a removable lid (920).

3. The device of claim 2, wherein at least one alternate blending speed is blending at a rate such that the content in said mixing vessel (910) can be heated.

4. The device of one of the preceding claims, said protrusion (830) engaging the recess (860) to align said second emitter (930) with said second detector (890), when said motor base receives said blade holder (104) affixed to said mixing vessel (910), the device further comprising:
a switch (612) located on said motor base (820), said switch connected to an electrical circuit capable of activating an alternative blend speed of said motor (820) depending on said signal from said second emitter (930) to said second detector (890).

5. The device of one of the preceding claims, wherein said first emitter (870) is a magnet.

6. The device of one of the preceding claims, wherein said second emitter (930) is a magnet.

7. The device of one of the preceding claims, wherein said first detector (880) embedded in the motor base (820) is a hall sensor.

8. The device of claim 4, wherein said switch (612) includes an indicator light that changes color depending on the blending speed that is active.

9. The device of one of the preceding claims, wherein said blade holder (104) is capable of removably attaching to a plurality of different mixing vessels, each said mixing vessel having a different type of second emitter (930).

10. The device of one of the preceding claims, wherein a plurality of gripping members (224) extend from an outer surface of the wall of the mixing vessel (910).

11. The device of claim 10, wherein the gripping members are ridges (224).

12. The device of one of claims 1 to 9, wherein a plurality of ridges (224) extend from an inner surface of the wall of the mixing vessel (910).

13. The device of one of the preceding claims, wherein the mixing vessel (910) is capable of being removably attached to a plurality of different blade holders (104), each blade holder (104) having a different kind of blade (404).

## Patentansprüche

1. Lebensmittelverarbeitungsgerät, mit:
einem Mischgefäß (910), wobei das Mischgefäß (910) folgendes aufweist:
ein erstes offenes Ende und ein zweites offenes Ende;
eine Krempe (840), die sich in der Nähe des ersten offenen Endes befindet, wobei die Krempe (840) eine erste Quelle (870) aufweist, die in die Krempe (840) eingebettet ist;
einen Vorsprung (830), der sich in der Nähe des ersten offenen Endes befindet, wobei der Vorsprung (830) eine zweite Quelle (930) aufweist, die in dem Vorsprung (830) eingebettet ist;
einen Klingenhalter (104), der eine Klinge (404) aufweist,
**dadurch gekennzeichnet, dass**
der Klingenhalter (104) lösbar am ersten offenen Ende des Mischgefäßes (910) befestigt werden kann;
eine Motorbasis (820), die imstande ist, den Klingenhalter (104) aufzunehmen, wobei die Motorbasis (820) folgendes umfasst:
eine Aussparung (860) zur Aufnahme des Vorsprungs (830) in dem Mischgefäß (910);
einen Motor (640) zum Antreiben der Klinge (404) des Klingenhalters (104);
einen ersten Detektor (880), der in die Motorbasis (820) eingebettet ist, um ein Signal von der ersten Quelle (870) des Mischgefäßes (910) zu erfassen; wobei, wenn die Motorbasis (820) den an dem Mischgefäß (910) befestigten Klingenhalter (104) aufnimmt, der erste Detektor (880) ein Signal von der ersten Quelle (870) in der Krempe (840) erfasst, um den Motor (640) zu aktivieren; und
einen zweiten Detektor (890) zum Erfassen eines Signals von der zweiten Quelle (930), wobei der zweite Detektor in die Aussparung (860) eingebettet ist; wobei die zweite Quelle (930) ein Signal an den zweiten Detektor (890) senden kann, um eine alternative Mischgeschwindigkeit in Abhängigkeit von dem Signal der zweiten Quelle (930) an den zweiten Detektor (890) zu aktivieren.

2. Gerät gemäß Anspruch 1, wobei
das erste offene Ende angepasst ist, an dem Klingenhalter (104) befestigt zu werden; und
das zweite offene Ende angepasst ist, an einem abnehmbaren Deckel (920) befestigt zu werden.

3. Gerät gemäß Anspruch 2, wobei mindestens eine alternative Mischgeschwindigkeit mit einer solchen Geschwindigkeit mischt, dass der Inhalt in dem Mischgefäß (910) erwärmt werden kann.

4. Gerät gemäß einem der vorangehenden Ansprüche, wobei der Vorsprung (830) in die Aussparung (860) eingreift, um die zweite Quelle (930) mit dem zweiten Detektor (890) auszurichten, wenn die Motorbasis den an dem Mischgefäß (910) befestigten Klingenhalter (104) aufnimmt, wobei das Gerät ferner folgendes umfasst:
einen Schalter (612), der sich an der Motorbasis (820) befindet, wobei der Schalter mit einem elektrischen Stromkreis verbunden ist, der in der Lage ist, eine alternative Mischgeschwindigkeit des Motors (820) in Abhängigkeit von dem Signal der zweiten Quelle (930) zu dem zweiten Detektor (890) zu aktivieren.

5. Gerät gemäß einem der vorangehenden Ansprüche, wobei die erste Quelle (870) ein Magnet ist.

6. Gerät gemäß einem der vorangehenden Ansprüche, wobei die zweite Quelle (930) ein Magnet ist.

7. Gerät gemäß einem der vorangehenden Ansprüche, wobei der erste Detektor (880), der in die Motorbasis (820) eingebettet ist, ein Hall-Sensor ist.

8. Gerät gemäß Anspruch 4, wobei der Schalter (612) ein Anzeigelicht umfasst, das die Farbe abhängig von der jeweiligen Mischgeschwindigkeit wechselt.

9. Gerät gemäß einem der vorangehenden Ansprüche, wobei der Klingenhalter (104) imstande ist, lösbar an eine Vielzahl von unterschiedlichen Mischgefäßen befestigt zu werden, wobei jedes der Mischgefäße einen unterschiedlichen Typ von zweiter Quelle (930) aufweist.

10. Gerät gemäß einem der vorangehenden Ansprüche, wobei sich eine Vielzahl von Greifelementen (224) von der äußeren Oberfläche der Wand des Mischgefäßes (910) erstreckt.

11. Gerät gemäß Anspruch 10, wobei die Greifelemente Rippen (224) sind.

12. Gerät gemäß einem der Ansprüche 1 bis 9, wobei sich eine Vielzahl von Rippen (224) von der inneren Oberfläche der Wand des Mischgefäßes (910) erstreckt.

13. Gerät gemäß einem der vorangehenden Ansprüche, wobei das Mischgefäß (910) imstande ist, ablösbar an eine Vielzahl von unterschiedlichen Klingenhaltern (104) befestigt zu werden, wobei jeder Klingenhalter (104) eine unterschiedliche Art Klinge (404) aufweist.

## Revendications

1. Dispositif de traitement de nourriture, comprenant :
une cuve de mélange (910), ladite cuve de mélange (910) ayant :
une première extrémité ouverte et une seconde extrémité ouverte ;
une lèvre (840) positionnée à proximité de ladite première extrémité ouverte ;
ladite lèvre (840) ayant un premier émetteur (870) encastré dans ladite lèvre (840) ;
une saillie (830) positionnée à proximité de ladite première extrémité ouverte ;
ladite saillie (830) ayant un second émetteur (930) encastré dans ladite saillie (830) ;
un porte-pale (104) ayant une pale (404) ;
**caractérisé en ce que** :
ledit porte-pale (104) peut être fixé de façon amovible à ladite première extrémité ouverte de ladite cuve de mélange (910) ;
une base de moteur (820) peut recevoir ledit porte-pale (104), ladite base de moteur (820) ayant :
un renfoncement (860) pour recevoir ladite saillie (830) dans ladite cuve de mélange (910) ;
un moteur (640) pour entraîner ladite pale (404) dudit porte-pale (104) ;
un premier détecteur (880) encastré dans ladite base de moteur (820) pour détecter un signal provenant dudit premier émetteur (870) de ladite cuve de mélange (910) ; dans lequel, lorsque ladite base de moteur (820) reçoit ledit porte-pale (104) fixé à ladite cuve de mélange (910), ledit premier détecteur (880) détecte un signal provenant dudit premier émetteur (870) dans ladite lèvre (840) pour activer ledit moteur (640) ; et
un second détecteur (890) pour détecter un signal provenant dudit second émetteur (930), ledit second détecteur étant un émetteur encastré dans le renfoncement (860) ; ledit second émetteur (930) peut émettre un signal à destination dudit second détecteur (890) pour activer une vitesse de mélange alternative en fonction dudit signal provenant dudit second émetteur (930) et destiné audit second détecteur (890).

2. Dispositif selon la revendication 1, dans lequel :
ladite première extrémité ouverte est conçue pour être fixée audit porte-pale (104) ; et
ladite seconde extrémité ouverte est conçue pour être fixée à un couvercle amovible (920).

3. Dispositif selon la revendication 2, dans lequel au moins une vitesse de mélange alternative effectue un mélange à une vitesse telle que le contenu de ladite cuve de mélange (910) peut être chauffé.

4. Dispositif selon l'une quelconque des revendications précédentes, ladite saillie (830) engrenant le renfoncement (860) pour aligner ledit second émetteur (930) avec ledit second détecteur (890) lorsque ladite base de moteur reçoit ledit porte-pale (104) fixé à ladite cuve de mélange (910), le dispositif comprenant en outre :
un interrupteur (612) positionné sur ladite base de moteur (820), ledit interrupteur étant relié à un circuit électrique pouvant activer une vitesse de mélange alternative dudit moteur (820) en fonction dudit signal provenant dudit second émetteur (930) et destiné audit second détecteur (890).

5. Dispositif selon l'une quelconque des revendications précédentes, dans lequel ledit premier émetteur (870) est un aimant.

6. Dispositif selon l'une quelconque des revendications précédentes, dans lequel ledit second émetteur (930) est un aimant.

7. Dispositif selon l'une quelconque des revendications précédentes, dans lequel ledit premier détecteur (880) encastré dans la base de moteur (820) est un capteur de Hall.

8. Dispositif selon la revendication 4, dans lequel ledit interrupteur (612) comprend une lumière témoin qui change de couleur en fonction de la vitesse de mélange activée.

9. Dispositif selon l'une quelconque des revendications précédentes, dans lequel ledit porte-pale (104) peut être fixé de façon amovible à une pluralité de cuves de mélange différentes, chacune desdites cuves de mélange ayant un type différent de second émetteur (930).

10. Dispositif selon l'une quelconque des revendications précédentes, dans lequel une pluralité d'éléments de préhension (224) s'étend hors d'une surface extérieure de la paroi de la cuve de mélange (910).

11. Dispositif selon la revendication 10, dans lequel les éléments de préhension sont des nervures (224).

12. Dispositif selon l'une quelconque des revendications 1 à 9, dans lequel une pluralité de nervures (224) s'étend hors d'une surface intérieure de la paroi de la cuve de mélange (910).

13. Dispositif selon l'une quelconque des revendications précédentes, dans lequel la cuve de mélange (910) peut être refixée de façon amovible à une pluralité de porte-pale (104) différents, chaque porte-pale (104) ayant un type différent de pale (404).
